# FASCICULE DE BREVET EUROPEEN

(11) **EP 3 261 801 B1**
(45) Date de publication et mention de la délivrance du brevet: **08.11.2023**
(21) Numéro de dépôt: 16713519.3
(22) Date de dépôt: 19.02.2016
(51) Int. Cl.: B23Q 1/00

(54) **SYSTÈME DE MONTAGE RAPIDE**
SCHNELLMONTAGESYSTEM
RAPID ASSEMBLY SYSTEM

(30) Priorité: 23.02.2015 FR 1551521
(43) Date de publication de la demande: 03.01.2018
(73) Titulaire: Boiteux, Christophe, 25530 Landresse (FR)
(72) Inventeur: Boiteux, Christophe, 25530 Landresse (FR)
(74) Mandataire: Novagraaf Technologies
(86) Numéro de dépôt international: PCT/FR2016/050391
(87) Numéro de publication internationale: WO 2016/135401

(56) Documents cités:
- EP-A1- 0 818 270
- EP-A1- 1 595 641
- CA-A1- 2 827 437

## Description

### Domaine technique

L'invention concerne un système de montage rapide dans le domaine industriel, par exemple celui des montages d'usinage. Le système comporte un support apte à recevoir de manière amovible un plateau.

### Etat de la technique

Il est connu dans le domaine de l'usinage de prévoir des plateaux sur lesquels des pièces à usiner sont fixées. Les plateaux sont ensuite euxmêmes bridés sur la table ou la broche d'un centre d'usinage pour subir les opérations d'usinage. L'avantage est que les pièces peuvent être interchangées très rapidement, ce qui permet une grande productivité du centre d'usinage. Les pièces sont montées sur le plateau en temps masqué en dehors du centre d'usinage. Cette solution permet aussi de transférer la pièce à usiner entre différents postes sans démontage de la pièce par rapport au plateau et donc par rapport à son référentiel. On assure ainsi une grande précision entre les transferts aux différents postes.

Le document DE 41 35 418 A1 propose un plateau de ce type avec son support. Le plateau et le support ont une forme sensiblement carrée et sont reliés entre eux par quatre dispositifs de liaison disposés aux quatre angles. Chaque dispositif de liaison comporte un mamelon fixé sur le plateau et un cylindre fixé sur le support et destiné à recevoir le mamelon. Un mécanisme à base de bille permet d'assurer le verrouillage du mamelon dans le cylindre. Le centrage est assuré par des surfaces de centrage cylindriques centrée sur les axes du mamelon et du cylindre et disposées sur un diamètre supérieur.

Un tel système a l'inconvénient de fournir un positionnement largement hyperstatique, ce qui peut poser des problèmes de montage, en particulier dans un environnement non stabilisé en température. Par ailleurs, la fixation à l'aide de billes crée des appuis ponctuels qui limitent les forces qui peuvent être déployées.

CA 2 827 437 A1 montre un système de montage rapide selon le préambule de la revendication 1.

L'invention vise à fournir un système de montage rapide ayant de fortes capacités en terme de charge et présentant moins de contraintes de positionnement.

### Description de l'invention

Avec ces objectifs en vue, l'invention a pour objet un système de montage rapide selon la revendication 1.

Le système selon l'invention permet d'avoir un plateau amovible rapidement. Son positionnement est réalisé par des guidages qui autorisent un coulissement selon une direction. Le positionnement est donc moins contraint que dans l'art antérieur qui n'autorisait pas de déplacement au niveau de chaque dispositif de liaison. De plus, comme les faces d'appui ont une forme en vé, elles ne laissent subsister aucun jeu pour des sollicitations dans un plan perpendiculaire à la direction de dent. On assure également un positionnement complet grâce à l'orientation oblique d'au moins deux dispositifs de liaison. Les dents peuvent être disposées avec des directions de dent perpendiculaires dans le cas de deux dents, en croix dans le cas de quatre dents, ou en étoile dans le cas de trois, cinq ou plus de dents. Les directions de dent peuvent être dans un même plan ou dans des plans différents, parallèles ou non.

Le système comporte par exemple au moins trois dispositifs de liaison entre le plateau et le support.

Selon une disposition constructive, les dents sont portées par le support. La surface inférieure de l'élément mobile, à savoir le plateau est ainsi assez large et assure une meilleure stabilité du plateau lorsqu'il est détaché du support et posé sur cette surface inférieure. De plus, la surface du support ne comporte que des éléments saillants et est ainsi plus accessible au nettoyage, afin par exemple d'éliminer des copeaux issus des opérations d'usinage. Cependant, les fonctions de positionnement des éléments entre eux seraient également réalisées si les dents étaient portées par le plateau.

Selon l'invention, les moyens de serrage comportent au moins un dispositif de serrage, chaque dispositif de serrage comportant au moins un coulisseau venant en appui en position de serrage contre une face de serrage de rainure ménagée dans la rainure et inclinée d'au plus 45° par rapport à l'axe du coulisseau de manière à plaquer les faces d'appui de dent et de rainure les unes sur les autres. Le dispositif de serrage est intégré complètement dans la dent. Le coulisseau assure une fixation non seulement en faisant obstacle à la séparation des surfaces d'appui, mais également en réalisant un placage des faces d'appui l'une sur l'autre. L'inclinaison de la face de serrage détermine une amplification de la force de coulissement du coulisseau, plus l'inclinaison par rapport à l'axe de coulisseau étant faible et plus grande étant l'amplification. De plus, on s'approche d'une irréversibilité, la réaction de la surface de serrage ne devenant plus apte à provoquer la rétractation du coulisseau. La limite est fonction de la course possible du coulisseau et les risques de coincement du coulisseau. Par ailleurs, les appuis sont ceux de surfaces planes l'une contre l'autre, ce qui permet de transmettre de grandes forces sans risque de marquage ou de déformation des surfaces.

De manière complémentaire, le dispositif de serrage comporte une tige de piston montée coulissante dans la dent selon une direction de piston oblique par rapport à l'axe de coulisseau, la tige de piston coopérant par son extrémité avec le coulisseau par des surfaces de renvoi inclinées par rapport aux axes de coulisseau et de piston pour que le coulissement du piston provoque le coulissement du coulisseau par glissement des surfaces de renvoi entre elles. On peut ainsi commander le coulissement du coulisseau en plaçant la tige parallèlement aux faces de la rainure et limiter ainsi la largeur de celle-ci. De plus, les surfaces de renvoi peuvent être inclinées de telle manière à obtenir également une amplification de la force exercée par la tige de piston et une augmentation de l'irréversibilité de la réaction.

Selon d'autres caractéristiques :
- la tige de piston est actionnée par des moyens élastiques tendant à renvoyer le coulisseau vers la position de serrage ; le maintien du serrage est ainsi assuré de manière passive, sans qu'une autre source d'énergie ne soit disponible ;
- les moyens élastiques sont formés par au moins un anneau en élastomère logé entre une tête de piston fixée sur la tige de piston et une plaque de fermeture solidaire de la dent ; cette solution permet une grande force d'actionnement sous un faible encombrement ;
- alternativement, les moyens élastiques sont formés par un empilement de rondelles Belleville, entre une tête de piston fixée sur la tige de piston et une plaque de fermeture solidaire de la dent ; les rondelles Belleville sont des rondelles dont la section est plate mais inclinée par rapport au plan d'appui de la rondelle ; l'empilement peut être toute combinaison d'alternance d'orientation des rondelles ;
- la tige de piston est actionnable par un fluide à l'encontre des moyens élastiques vers une position d'ouverture ; ainsi seul le déverrouillage nécessite la fourniture d'une énergie externe, par exemple sous la forme d'air comprimé ou d'un fluide hydraulique sous pression ;
- les surfaces de renvoi ont une section en té afin de solliciter le coulisseau en double sens ; la rétractation du coulisseau peut ainsi être commandée de manière positive ; la section pourrait aussi être une queue d'aronde ou toute forme de coulisse assurant une sollicitation bidirectionnelle ;
- les moyens de serrage comportent un deuxième coulisseau ayant le même axe que le premier coulisseau venant en appui en position de serrage contre une deuxième face de serrage de rainure ménagée dans la rainure et inclinée d'au plus 45° par rapport à l'axe du coulisseau de manière à plaquer les faces d'appui de dent et de rainure les unes sur les autres ; on réalise ainsi un double serrage avec une même tige de piston ; de plus le serrage est mieux réparti de même que la sollicitation sur la tige de piston ;
- chaque dent comporte au moins deux dispositifs de serrage ;
- chaque dent a un corps cylindrique logé dans un logement du support ;
- la dent est montée libre en pivotement dans le logement ; ceci permet un autoalignement de la dent selon la direction de la rainure ; cette possibilité de pivotement peut être limitée.

### Brève description des figures

L'invention sera mieux comprise et d'autres particularités et avantages apparaîtront à la lecture de la description qui va suivre, la description faisant référence aux dessins annexés parmi lesquels :
- les figures 1 et 2 sont des vues respectivement en perspective et de côté d'un système conforme à un premier mode de réalisation de l'invention ;
- les figures 3 à 5 sont des vues respectivement de côté, de dessus et en perspective d'un support faisant partie du système de la figure 1 ;
- la figure 6 est une vue en perspective du dessous d'un plateau faisant partie du système de la figure 1 ;
- la figure 7 est une vue en perspective d'une dent du support des figures 3 à 5 ;
- la figure 8 est une vue en perspective d'un sous-ensemble contenu dans la dent de la figure 7 ;
- les figures 9 et 10 sont des vues en coupe de la dent de la figure 7, respectivement en position de serrage et en position d'ouverture ;
- les figures 11 et 12 sont des vues similaires aux figures 9 et 10, plus détaillées et avec le plateau en place
- la figure 13 est une vue en perspective d'un support selon un deuxième mode de réalisation de l'invention ;
- la figure 14 est une vue en coupe du support de la figure 13 ;
- la figure 15 est une vue similaire à la figure 13 d'un système comprenant le support et un plateau ;
- la figure 16 est une vue en coupe du système de la figure 15 ;
- la figure 17 est une vue en perspective d'un dispositif de serrage du plateau de la figure 13.

### DESCRIPTION DETAILLEE

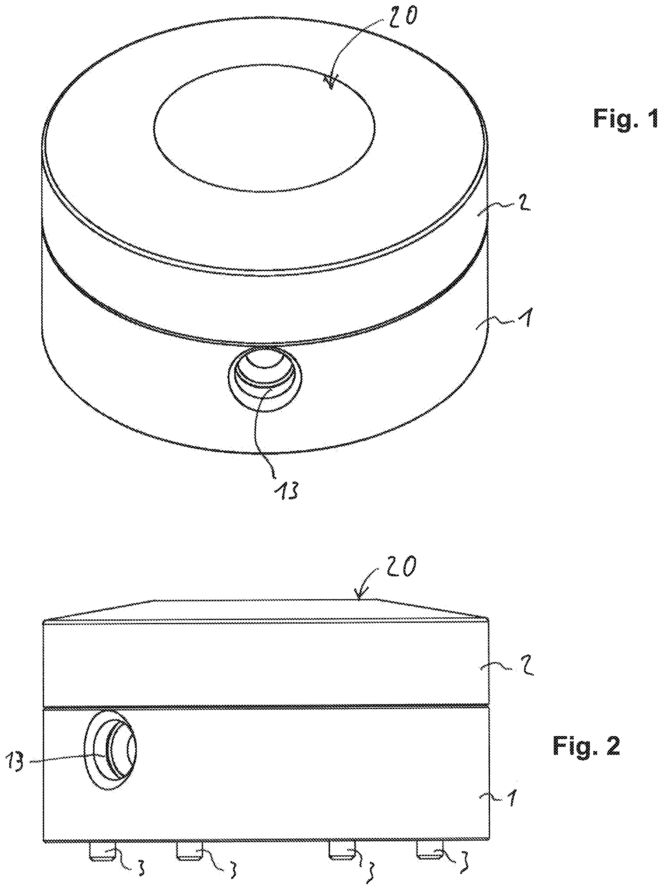

Un système de montage rapide comportant un support 1 et un plateau 2 monté de manière amovible sur le support 1 selon un premier mode de réalisation de l'invention est représenté sur les figures 1 et 2. Ils ont une forme extérieure cylindrique sensiblement de même diamètre. La face supérieure 20 du plateau 2 est prévue pour recevoir une pièce à usiner, non représentée. Le support 1 est destiné à être monté sur une table ou une broche d'une machine-outil, non représentés, telle qu'un centre d'usinage ou un tour. Des vis 3 sont représentées avec le support 1 et sont destinées à le fixer sur la machine-outil.

Le système de montage comporte quatre dispositifs de liaison 4 entre le plateau 2 et le support 1. Chaque dispositif de liaison 4 comporte une dent 41 fixée dans le support 1 et une rainure 42 ménagée dans le plateau 2. Chaque dent 41 comporte une paire de faces d'appui de dent 411 disposées en vé et dont l'intersection théorique s'étend dans une direction de dent. La rainure 42 comporte une paire de faces d'appui de rainure 421 pour venir en appui sur les faces d'appui de dent 411 et s'étend donc dans la direction de la dent 41 correspondante. Les quatre directions de dent forment une croix à angle droit et sont dans le même plan. Les faces d'appui de dent 411 forment ainsi un chanfrein de part et d'autre de la dent 41 en raccordement avec une face de raccord 12 du support 1. De même les faces d'appui de rainure 421 forment des chanfreins sur les angles entre la rainure 42 et une face inférieure 21 du plateau 2. Lorsque le plateau 2 est monté sur le support 1, les dents 41 sont logées dans les rainures 42, et il subsiste un intervalle entre la face de raccord 12 et la face inférieure du plateau 2. Les dents 41 sont des pièces séparées qui sont montées dans des logements 43 traversant l'épaisseur du support 1. Les dents 41 comportent des talons à leur base qui viennent en butée contre des épaulements du support 2, en périphérie des logements 43. Une couronne 22 est fixée sous le support 2 en prenant appui sur les dents 41 afin de plaquer celles-ci en appui sur les talons 412.

Des moyens de serrage 5 sont prévus pour maintenir le plateau 2 contre le support 1. Les moyens de serrage 5 comportent deux dispositifs de serrage 50, chaque dispositif de serrage 50 comportant deux coulisseaux 501 de même axe venant en appui en position de serrage contre une face de serrage de rainure 51 respective ménagée dans la rainure 42 et inclinée de 30° par rapport à l'axe du coulisseau de manière à plaquer les faces d'appui de dent 411 et de rainure 421 les unes sur les autres. Le dispositif de serrage 50 comporte une tige de piston 502 montée coulissante dans la dent 41 selon une direction de piston oblique par rapport à l'axe de coulisseau. La tige de piston 502 coopère par son extrémité avec les coulisseaux 501 par des surfaces de renvoi 503 inclinées par rapport aux axes de coulisseau et de 30° par rapport à l'axe de piston pour que le coulissement de la tige de piston 502 provoque le coulissement des coulisseaux 501 en opposition par glissement des surfaces de renvoi 503 entre elles. Les surfaces de renvoi 503 ont une section en té afin de solliciter les coulisseaux 501 en double sens.

La tige de piston 502 reçoit une tête de piston 504 plus large qu'elle à l'opposé des surfaces de renvoi 503. La tête de piston 504 est montée dans un logement 505 de manière à délimiter une chambre de commande 506. La chambre 507 opposée à la chambre de commande 506 est occupée des moyens élastiques 508 qui actionnent la tige de piston 502 en tendant à renvoyer le coulisseau 501 vers la position de serrage. Les moyens élastiques sont formés par deux anneaux 508 en élastomère logés en compression entre la tête de piston 504 et une plaque de fermeture solidaire de la dent 41. La chambre de commande 506 est reliée hydrauliquement à une entrée 13 pour que la tige de piston 502 soit actionnable par un fluide à l'encontre des moyens élastiques 508 vers la position d'ouverture.

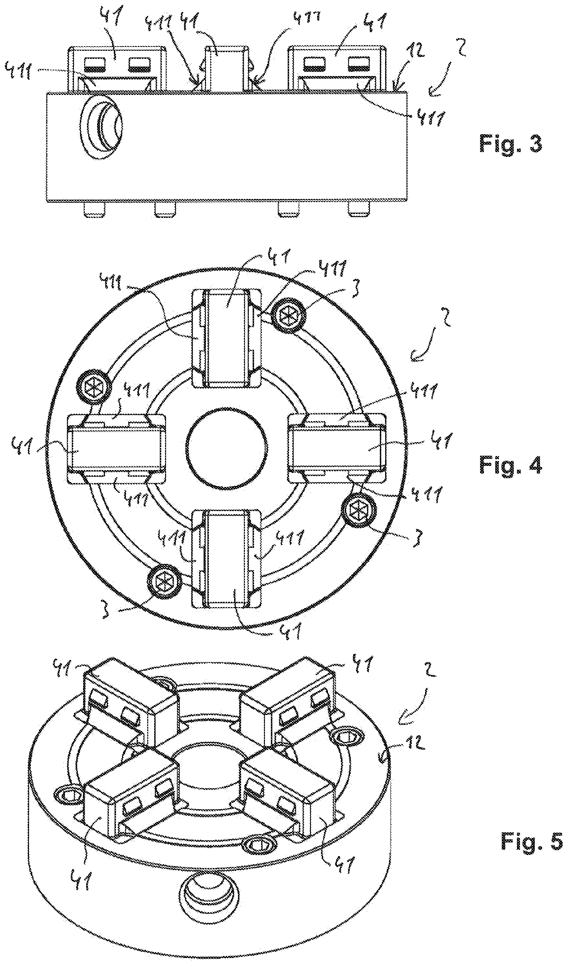

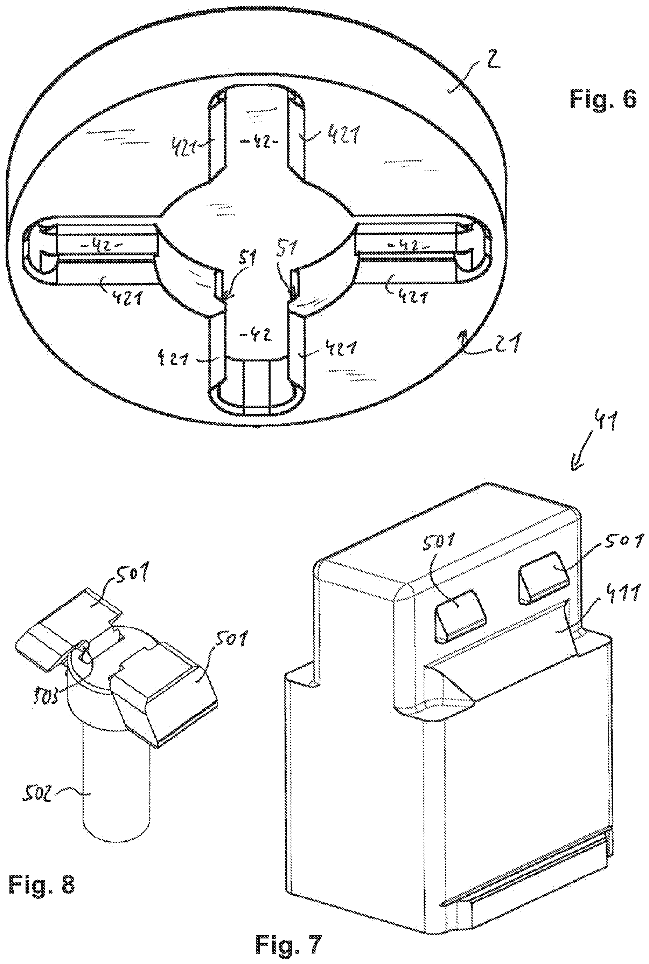

On considère une position initiale dans laquelle le support 1 est séparé du plateau 2, comme représenté sur les figures 3 à 6.

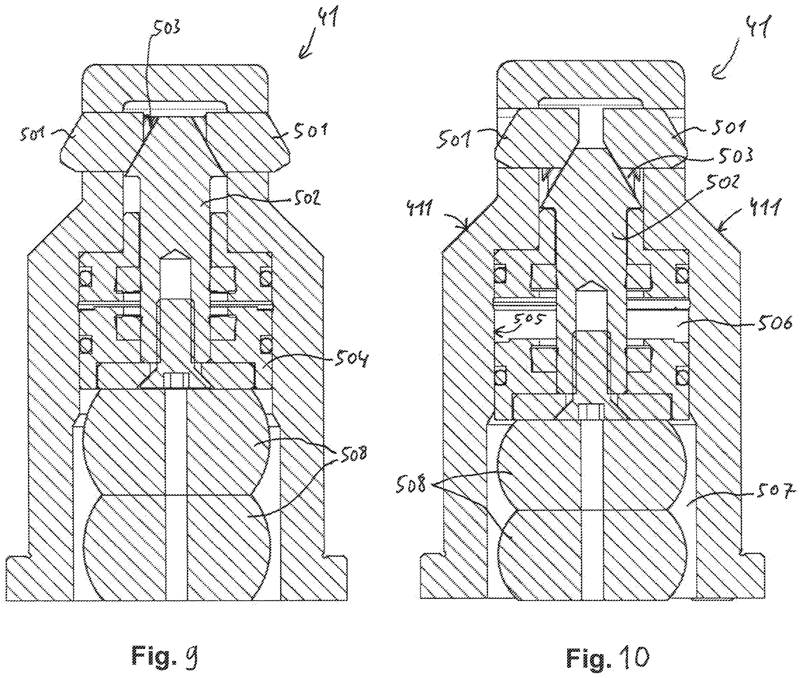

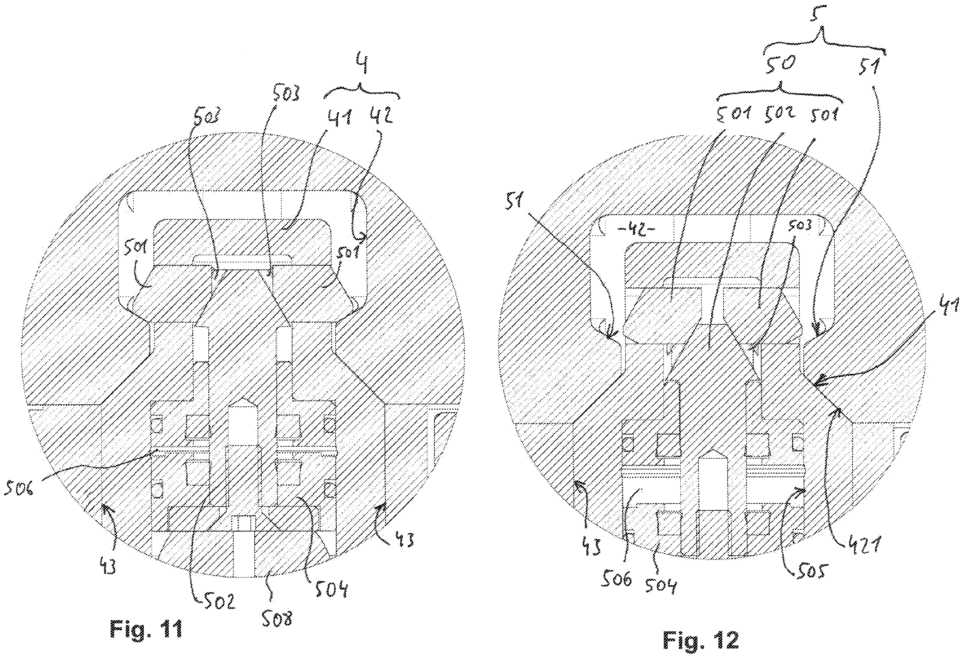

On commande la position d'ouverture en envoyant un fluide sous pression par l'entrée dans les chambres de commande 506. La tige de piston 502 des dispositifs de serrage 50 est déplacée dans le sens de la compression des anneaux 508. Dans ce mouvement, les surfaces de renvoi 503 glissent entre elles pour rétracter les coulisseaux 501, c'est-à-dire les rapprocher l'un de l'autre de manière à ce qu'ils ne fassent presque plus saillie des dents 41, de manière à atteindre la position d'ouverture comme représentée sur les figures 10 et 12.

Le plateau 2 peut alors être déposé sur le support 1 en insérant les dents 41 dans les rainures 42. Les faces d'appui de rainure 421 viennent en contact avec les faces d'appui de dent 411, ce qui détermine la position du plateau 2 par rapport au support 1. La pression du fluide est alors relâchée, et sous l'action des anneaux 508 élastiques, la tige de piston 502 est repoussée pour diminuer le volume de la chambre de commande 506. La tige de piston 502 provoque le glissement des surfaces de renvoi 503 de manière à commander le coulissement des coulisseaux 501 à l'opposé l'un de l'autre, pour faire saillie des dents 41. Les coulisseaux 501 viennent alors en appui sur les faces de serrage de rainure 51. Du fait de l'inclinaison de celles-ci, une force de placage du plateau 2 sur les faces d'appui est générée, assurant ainsi le bridage du plateau 2 sur le support 1.

Pour le démontage, en effectue à nouveau une mise en pression dans les chambres de commande pour obtenir la rétractation des coulisseaux 501. Le plateau 2 est alors libéré.

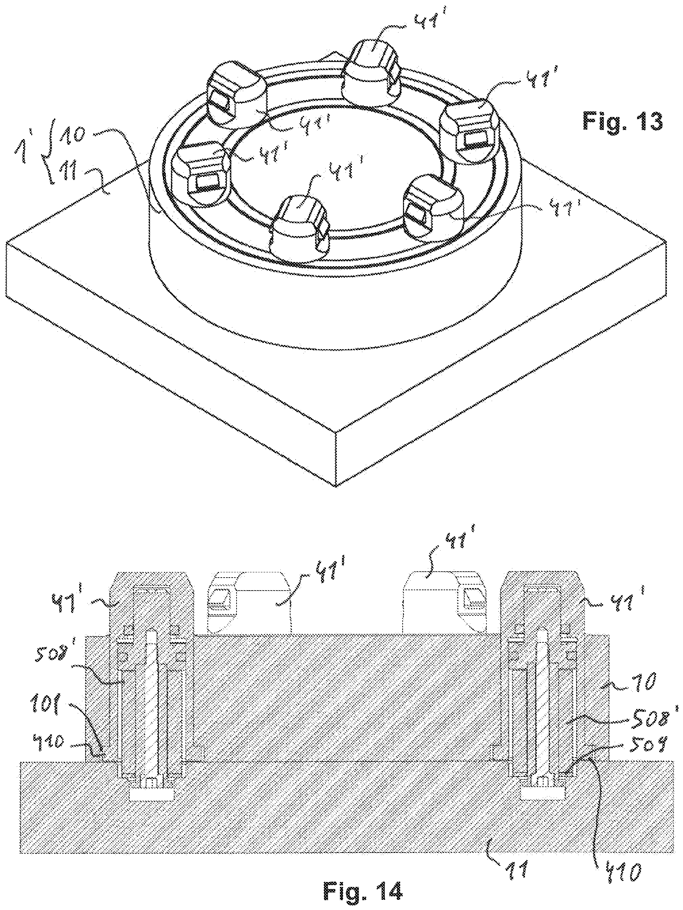

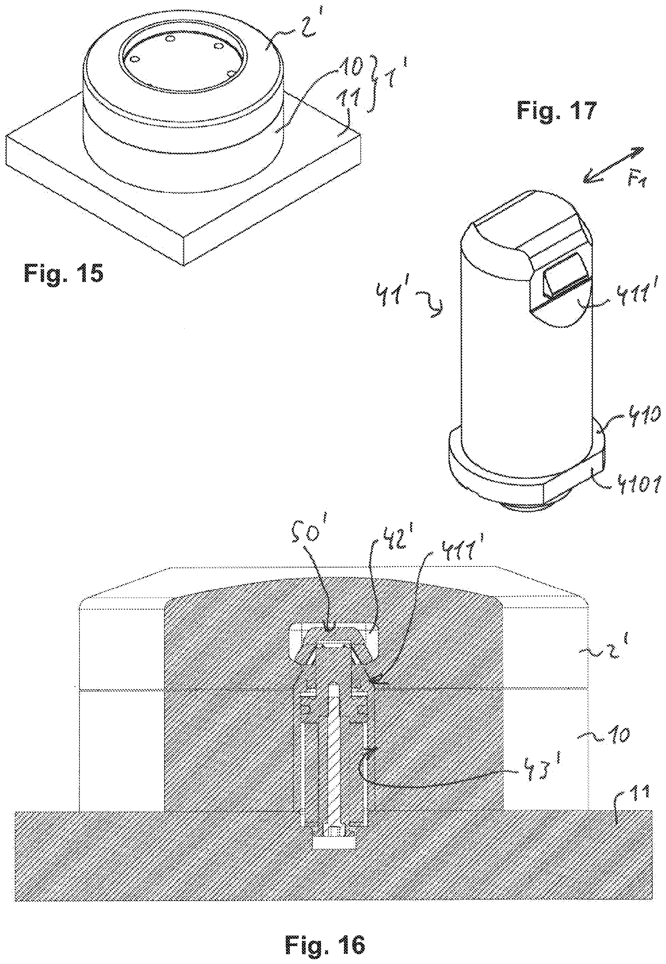

Selon un deuxième mode de réalisation, montré sur les figures 13 à 17, les dents 41' ont un corps de forme cylindrique et sont montées dans des logements 43' cylindriques du plateau 2'. Le support 1' comporte par exemple six dents 41' réparties autour d'un centre. Les faces d'appui de dent 411' sont orientées de telle sorte que les directions de dent F1 convergent au centre. Chaque dent 41' comporte un unique dispositif de serrage 50', similaire à celui décrit en lien avec le premier mode de réalisation.

Le support 1' est formé de deux pièces, une pièce supérieure 10 portant les logements 43' des dents 41', et un socle 11 fermant les logements 43' pour emprisonner les dents 41' en enserrant une collerette 410 à la base des dents 41' dans une feuillure 101 de la pièce supérieure 10. L'anneau élastique 508' s'appuie sur le socle 11 par l'intermédiaire d'une rondelle 509 pour être mis sous tension. Le socle 11 fait ainsi la fonction de plaque de fermeture telle que décrite avec le premier mode de réalisation. Le socle 11 et la pièce supérieure 10 sont assemblés par exemple par des vis, non représentées. Ce montage est également utilisé pour le premier mode de réalisation, bien que non visible sur les figures.

Dans ce mode de réalisation, la collerette 410 comporte deux méplats 4101 qui coopèrent avec des faces correspondantes dans la feuillure 101 afin de déterminer l'orientation de la dent 41'. En variante, on peut prévoir un jeu important afin que la dent 41' s'oriente selon la direction de la rainure 42' du plateau 2'.

## Revendications

1. Système de montage rapide comportant un support (1, 1') et un plateau (2, 2') monté de manière amovible sur le support (1, 1'), le système comportant au moins deux dispositifs de liaison (4) entre le plateau (2) et le support (1, 1'), chaque dispositif comportant en outre des moyens de serrage (5) pour maintenir le plateau (2, 2') contre le support (1, 1'), chaque dispositif de liaison (4) comportant une dent (41, 41') comportant une paire de faces d'appui de dent (411, 411') disposées en vé et dont l'intersection théorique s'étend dans une direction de dent (F1), et une rainure (42, 42') comportant une paire de faces d'appui de rainure (421) pour venir en appui sur les faces d'appui de dent (411) les directions de dent d'au moins deux différents dispositifs de liaison (4) étant obliques l'une par rapport à l'autre, **caractérisé en ce que** les moyens de serrage (5) comportent au moins un dispositif de serrage (50, 50'), chaque dispositif de serrage (50, 50') comportant au moins un coulisseau (501) venant en appui en position de serrage contre une face de serrage de rainure (51) ménagée dans la rainure (42) et inclinée d'au plus 45° par rapport à l'axe du coulisseau de manière à plaquer les faces d'appui de dent (411) et de rainure (421) les unes sur les autres..

2. Système selon la revendication 1, **caractérisé en ce qu'**il comporte au moins trois dispositifs de liaison (4) entre le plateau (2) et le support (1, 1').

3. Système de montage selon la revendication 1, dans lequel les dents (41, 41') sont portées par le support (1, 1').

4. Système de montage selon l'une quelconque des revendications précédentes, dans lequel le dispositif de serrage (50) comporte une tige de piston (502) montée coulissante dans la dent selon une direction de piston oblique par rapport à l'axe de coulisseau, la tige de piston (502) coopérant par son extrémité avec le coulisseau (501) par des surfaces de renvoi (503) inclinées par rapport aux axes de coulisseau et de piston pour que le coulissement du piston (502) provoque le coulissement du coulisseau (501) par glissement des surfaces de renvoi (503) entre elles.

5. Système de montage selon la revendication 4, dans lequel la tige de piston (502) est actionnée par des moyens élastiques (508, 508') tendant à renvoyer le coulisseau (501) vers la position de serrage.

6. Système de montage selon la revendication 5, dans lequel les moyens élastiques (508, 508') sont formés par au moins un anneau en élastomère logé entre une tête de piston (504) fixée sur la tige de piston (502) et une plaque de fermeture (11) solidaire de la dent (41).

7. Système de montage selon la revendication 5, dans lequel les moyens élastiques sont formés par un empilement de rondelles Belleville, entre une tête de piston (504) fixée sur la tige de piston (502) et une plaque de fermeture (11) solidaire de la dent (41).

8. Système de montage selon l'une des revendications 5 à 7, dans lequel la tige de piston (502) est actionnable par un fluide à l'encontre des moyens élastiques (508, 508') vers une position d'ouverture.

9. Système de montage selon la revendication 8, dans lequel les surfaces de renvoi (503) ont une section en té afin de solliciter le coulisseau (501) en double sens.

10. Système de montage selon l'une des revendications précédentes, dans lequel les moyens de serrage (5) comportent un deuxième coulisseau (501) ayant le même axe que le premier coulisseau (501) venant en appui en position de serrage contre une deuxième face de serrage de rainure (51) ménagée dans la rainure (42) et inclinée par rapport à l'axe du coulisseau de manière à plaquer les faces d'appui de dent (411) et de rainure (421) les unes sur les autres.

11. Système de montage selon la revendication 10, dans lequel l'inclinaison de la deuxième face de serrage de rainure (51) par rapport à l'axe du coulisseau est d'au plus 45°.

12. Système de montage selon l'une des revendications précédentes, dans lequel chaque dent (41) comporte au moins deux dispositifs de serrage.

13. Système de montage selon l'une des revendications précédentes, dans lequel chaque dent (41') a un corps cylindrique logé dans un logement (43') du support (1').

14. Système de montage selon la revendication 13, dans lequel la dent (41') est montée libre en pivotement dans le logement (43').

## Patentansprüche

1. Schnellmontagesystem, umfassend eine Halterung (1, 1') und eine Platte (2, 2'), die an der Halterung (1, 1') abnehmbar montiert ist, das System umfassend mindestens zwei Verbindungsvorrichtungen (4) zwischen der Platte (2) und der Halterung (1, 1'), wobei jede Vorrichtung ferner Klemmmittel (5) zum Halten der Platte (2, 2') gegen die Halterung (1, 1') umfasst, wobei jede Verbindungsvorrichtung (4) einen Zahn (41, 41') umfasst, umfassend ein Paar von Zahnanlageflächen (411, 411'), die in einer V-Form angeordnet sind und deren theoretischer Schnittpunkt sich in einer Zahnrichtung (F1) erstreckt, und eine Nut (42, 42'), umfassend ein Paar von Nutanlageflächen (421), um die Zahnanlageflächen (411) in Anlage zu bringen, wobei die Zahnrichtungen von mindestens zwei verschiedenen Verbindungsvorrichtungen (4) schräg zueinander verlaufen, **dadurch gekennzeichnet, dass** die Klemmmittel (5) mindestens eine Klemmvorrichtung (50, 50') umfassen, wobei jede Klemmvorrichtung (50, 50') mindestens einen Schieber (501) umfasst, der in der Klemmposition gegen eine Nutklemmfläche (51) in Anlage kommt, die in der Nut (42) vorgesehen ist und um höchstens 45° zu der Achse des Schiebers geneigt ist, so dass die Zahn- (411) und die Nutanlageflächen (421) gegeneinander gepresst werden..

2. System nach Anspruch 1, **dadurch gekennzeichnet, dass** es mindestens drei Verbindungsvorrichtungen (4) zwischen der Platte (2) und der Halterung (1, 1') umfasst.

3. Montagesystem nach Anspruch 1, wobei die Zähne (41, 41') durch die Halterung (1, 1') getragen werden.

4. Montagesystem nach einem der vorstehenden Ansprüche, wobei die Spannvorrichtung (50) eine Kolbenstange (502) umfasst, die in dem Zahn in einer zu der Schieberachse schrägen Kolbenrichtung verschiebbar montiert ist, wobei die Kolbenstange (502) an ihrem Ende mit dem Schieber (501) durch Rückführungsoberflächen (503) zusammenwirkt, die zu der Schieber- und der Kolbenachse geneigt sind, so dass die Verschiebung des Kolbens (502) die Verschiebung des Schiebers (501) durch Gleiten der Rückführungsoberflächen (503) untereinander bewirkt.

5. Montagesystem nach Anspruch 4, wobei die Kolbenstange (502) durch elastische Mittel (508, 508') betätigt wird, die dazu neigen, den Schieber (501) in die Klemmposition zurückzuführen.

6. Montagesystem nach Anspruch 5, wobei die elastischen Mittel (508, 508') durch mindestens einen Elastomerring ausgebildet werden, der zwischen einem Kolbenkopf (504), der an der Kolbenstange (502) befestigt ist, und einer Verschlussplatte (11), die mit dem Zahn (41) fest verbunden ist, aufgenommen ist.

7. Montagesystem nach Anspruch 5, wobei die elastischen Mittel durch einen Stapel von Belleville-Dichtungsringen, zwischen einem Kolbenkopf (504), der an der Kolbenstange (502) befestigt ist, und einer Verschlussplatte (11), die mit dem Zahn (41) fest verbunden ist, ausgebildet werden.

8. Montagesystem nach einem der Ansprüche 5 bis 7, wobei die Kolbenstange (502) durch ein Fluid gegenüber den elastischen Mitteln (508, 508') in eine Öffnungsposition betätigbar ist.

9. Montagesystem nach Anspruch 8, wobei die Rückführungsoberflächen (503) einen T-förmigen Querschnitt aufweisen, um den Schieber (501) in zwei Richtungen zu beanspruchen.

10. Montagesystem nach einem der vorstehenden Ansprüche, wobei die Klemmmittel (5) einen zweiten Schieber (501), der dieselbe Achse wie der erste Schieber (501) aufweist, umfasst, der in der Klemmposition gegen eine zweite Nutklemmfläche (51) in Anlage kommt, die in der Nut (42) vorgesehen ist und zu der Achse des Schiebers geneigt ist, so dass die Zahn- (411) und die Nutanlageflächen (421) gegeneinander gepresst werden.

11. Montagesystem nach Anspruch 10, wobei die Neigung der zweiten Nutklemmfläche (51) zu der Achse des Schiebers höchstens 45° beträgt.

12. Montagesystem nach einem der vorstehenden Ansprüche, wobei jeder Zahn (41) mindestens zwei Klemmvorrichtungen umfasst.

13. Montagesystem nach einem der vorstehenden Ansprüche, wobei jeder Zahn (41') einen zylindrischen Körper aufweist, der in einer Aufnahme (43') der Halterung (1') aufgenommen ist.

14. Montagesystem nach Anspruch 13, wobei der Zahn (41') in der Aufnahme (43') frei schwenkbar montiert ist.

## Claims

1. A rapid assembly system comprising a mounting (1, 1') and a plate (2,2') assembled removably to the mounting (1, 1'), the system comprising at least two connection devices (4) between the plate (2) and the mounting (1, 1'), each device also comprising clamping means (5) for holding the plate (2, 2') against the mounting (1, 1'), each connection device (4) comprising a tooth (41, 41') comprising a pair of tooth engagement surfaces (411, 411') positioned in a V shape and the theoretical intersection whereof extends in a tooth direction (F1), and a groove (42, 42') comprising a pair of groove engagement surfaces (421) for engaging the tooth engagement surfaces (411), the tooth directions of at least two different connection devices (4) being oblique with respect to one another, **characterized in that** the clamping means (5) comprise at least one clamping device (50, 50'), each clamping device (50, 50') comprising at least one slide (501) engaging, in the clamped position, against a groove clamping surface (51) provided in the groove (42) and inclined by 45° at the most with respect to the axis of the slide so as to press the tooth (411) and groove (421) engagement surfaces together.

2. The system according to claim 1, **characterized in that** it comprises at least three connection devices (4) between the plate (2) and the mounting (1, 1').

3. The assembly system according to claim 1, wherein the teeth (41, 41') are carried by the mounting (1, 1').

4. The assembly system according to any of the preceding claims, wherein the clamping device (50) comprises a piston rod (502) assembled sliding in the tooth in an oblique piston direction with respect to the axis of the slide, the piston rod (502) cooperating through its end with the slide (501) through deflection surfaces (503) inclined with respect to the axes of the slide and the piston so that the sliding of the piston (502) causes the sliding of the slide (501) by mutually sliding the deflection surfaces (503).

5. The assembly system according to claim 4, wherein the piston rod (502) is actuated by elastic means (508, 508') tending to return the slide (501) toward the clamping position.

6. The assembly system according to claim 5, wherein the elastic means (508, 508') are formed by at least one ring made of elastomers housed between a piston head (504) attached to the piston rod (502) and a closure plate (11) firmly attached to the tooth (41).

7. The assembly system according to claim 5, wherein the elastic means are formed by a stack of Belleville washers, between a piston head (504) attached to the piston rod (502) and a closure plate (11) firmly attached to the tooth (41).

8. The assembly system according to one of claims 5 to 7, wherein the piston rod (502) can be actuated by a fluid against the elastic means (508, 508') toward an open position.

9. The assembly system according to claim 8, wherein the deflection surfaces (503) have a T shaped section so as to load the slide (501) bi-directionally.

10. The assembly system according to one of the preceding claims, wherein the clamping means (5) comprise a second slide (501) having the same axis as the first slide (501) engaging, in the clamping position, against a second groove clamping surface (51) provided in the groove (42) and inclined with respect to the axis of the slide so as to press the tooth (411) and groove (421) engagement faces together.

11. The assembly system according to claim 10, wherein the inclination of the second groove clamping surface (51) with respect to the axis of the slide is 45° at the most.

12. The assembly system according to one of the preceding claims, wherein each tooth (41) comprises at least two clamping devices.

13. The assembly system according to one of the preceding claims, wherein each tooth (41') has a cylindrical body housed in a housing (43') of the mounting (1').

14. The assembly system according to claim 13, wherein the tooth (41') is assembled pivotably in the housing (43').
